# EUROPEAN PATENT SPECIFICATION

(11) **EP 1 123 767 B1**
(45) Date of publication and mention of the grant of the patent: **01.06.2005**
(21) Application number: 01300653.1
(22) Date of filing: 25.01.2001
(51) Int. Cl.: B23D 23/00, B21D 13/04, B26D 1/10

(54) **Corrugation cut-off apparatus**
Vorrichtung zum Schneiden eines Metallbleches mit einer Wellung
Dispositif pour couper des éléments ondulés

(30) Priority: 09.02.2000 GB 0002820
(43) Date of publication of application: 16.08.2001
(73) Proprietor: Emerson & Renwick Ltd, Accrington, Lancashire BB5 4EF (GB)
(72) Inventor: Topping, John, Wilpshire, Blackburn BB1 9HX (GB); Hargreaves, Colin, Near Huddersfield, West Yorkshire (GB)
(74) Representative: Jenkins, Richard Gavin

(56) References cited:
- DE-U- 6 920 810
- GB-A- 2 118 881

## Description

This invention relates to apparatus for cutting predetermined lengths from transversely corrugated elongate strip material, primarily, but not exclusively, transversely corrugated metal strip (see for example GB-A-2 118 881).

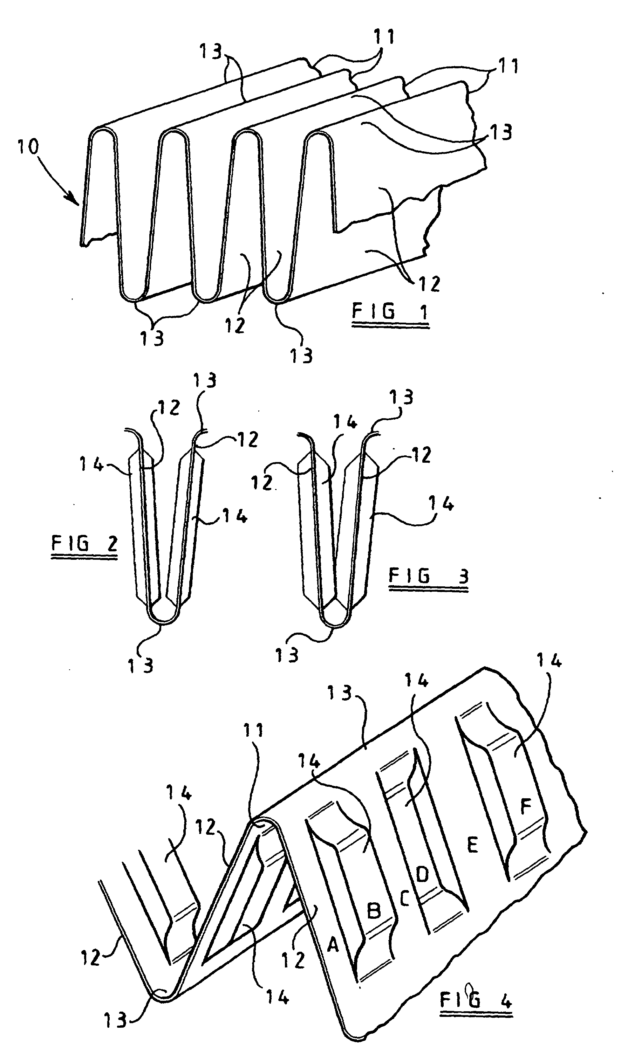

Figure 1 in the accompanying drawings illustrates transversely corrugated metal strip 10, plane elongate strip from a roll having been driven through a corrugating machine which bends the strip transverse to its length to produce folds extending transverse to the length of the strip so that the strip 10 has a wave-like form in which each corrugation 11 has opposite mutually inclined planar regions 12 interconnected by an integral, curved end region 13.

The planar regions 12 of the material shown in Figure 1 are uninterrupted, but as shown in Figure 2 the planar regions can, if desired, be formed with a plurality of parallel cuts defining between them louvres 14 which are then twisted relative to the plane of the planar regions so as to lie oblique relative thereto leaving windows in the planar regions 12. In use the corrugated material is cut into predetermined lengths and may be used in the manufacture of heat exchangers where the corrugated material is referred to as "fin material" and is in heat exchange relationship with fluid carrying tubes.

Figure 3 illustrates an arrangement in which the louvres 14 overlap at the narrower end of each corrugation.

Figure 4 illustrates a known arrangement in which the louvres B, D, F are spaced apart by undeformed bands of A, C, E of the planar region, and rather than being twisted to be inclined to the plane of the planar regions 12, the louvres B, D F, *et seq* remain parallel to their respective planar region but are displaced out of the plane thereof, alternate louvres being displaced in opposite directions. Although not readily apparent from Figure 4 there can be an embodiment of the louvre construction shown in Figure 4 in which the inwardly displaced louvres of opposite planar regions 12 of a corrugation 11 are spaced from another along the length of the corrugation, but extend sufficiently far inwardly of the corrugation to overlap.

It will be recognised that where louvres overlap, for example as described with reference to Figures 3 and 4, access to the inner surface of the bend 13 interconnecting the two planar regions 12 of the corrugation is obstructed by the louvres.

Conventionally the corrugated strip material 10 is cut into predetermined lengths by a blade which passes between the planar regions of a corrugation and cuts through the bend 13 of the corrugation from its inner surface. The blade may be a vertically moveable blade, an elongate blade pivoted at one end, or a rotating blade introduced into the corrugation. Irrespective of the nature of the blade accurate access to the centre region of the bend, within the corrugation, is difficult to achieve and this difficulty is much greater where the pitch of the corrugations is small relative to the blade thickness and is even more difficult where the planar regions have overlapping louvres. It is an object of the present invention to provide an apparatus for cutting corrugated material into predetermined lengths wherein the problems of the aforementioned known apparatus are minimised.

According to the present invention there is provided apparatus for cutting transversely corrugated strip material comprising a support surface over which the corrugated material passes, a cutting blade capable of severing the corrugated strip material, and means for traversing the blade along the outer surface of the length of a bend interconnecting the planar regions of a corrugation to severe the strip material along the length of said bend.

Preferably the apparatus includes means resisting lifting movement of the corrugated material in the region of said blade during traverse of the blade along the length of the exterior of the corrugation.

Conveniently the corrugated material is fed lengthwise over said support surface and its movement, at least in the region of the corrugation to be cut, is halted for the period time during which the blade traverses the length of the corrugation.

Alternatively the blade is movably mounted on a carrier moveable longitudinally with the corrugated strip material and synchronised therewith so that during the cutting stroke the cutting blade is moving longitudinally with the corrugated material at the same time as it is traversing the length of the corrugation being cut.

Preferably the blade is able to cut in both forward and reverse directions, and after a cutting stroke in one direction the blade is retained in position while a predetermined length of corrugated material passes through the apparatus, before being returned to its original starting position performing a second cut during its return movement.

Preferably a fluted wheel or roller having axially extending peripheral flutes in a pitch corresponding to the pitch of the corrugations on the strip to be cut, is positioned above the path of movement of said blade and cooperates with the corrugated strip both to prevent the strip lifting during traverse of the cutting blade, and also to halt longitudinal movement of the strip, at least in the region of the strip being cut, during the cutting operation.

Preferably the support surface has a transversely extending slot along which the cutting blade travels during a cutting operation.

Conveniently opposite walls of said slot are defined by vertically moveable walls which, at the commencement of a cutting stroke of said blade, are lifted relative to the support surface and the corrugated material to engage the planar regions of the corrugation on opposite sides of the bend so as to stabilise the corrugated material during cutting.

Desirably said support surface includes bridging fingers which span the slot to support the corrugated material as it passes over the slot, and which are displaced to fully expose the slot during a cutting stroke of said blade.

Alternatively the cutting apparatus includes an externally, axially grooved drum mounted for rotation relative to said support surface and engageable with said corrugated strip material passing along said support surface such that a bend of a corrugation seats within one of said grooves, the base of each of said grooves being longitudinally slotted to provide access to the exterior of a corrugation bend seated in the groove, to a cutting blade movable axially within the drum to cut said bend.

Preferably the corrugated material engaging the drum passes between said drum and an abutment surface as the drum rotates, said abutment surface resisting lifting of the corrugation relative to the drum during cutting of its bend.

Desirably said blade lies clear of the drum slots at the end of its stroke to permit the drum to rotate, there being means halting drum rotation as the blade traverses a drum slot to cut the corrugated material.

Conveniently the blade is carried by a mechanism extensible axially through the drum.

Preferably said drum is housed in an aperture in said support surface such that the plane of said support surface is tangential to the pitch circle of the bases of said grooves of the drum.

In the accompanying drawings,
Figures 1 to 4 are diagrammatic views respectively of known forms of corrugated strip metal;
Figure 5 is a diagrammatic side elevational view of a cut-off apparatus in accordance with one example of the present invention;
Figure 6 is a side elevational view of the blade traverse mechanism of the apparatus of Figure 5;
Figure 7 is an enlarged sectional view illustrating stabilisation members of the apparatus for Figure 5;
Figure 8 is a diagrammatic perspective view of part of the arrangement illustrated in Figure 7;
Figure 9 is a view similar to Figure 5 illustrating an addition to the apparatus of Figure 5,
Figure 10 is a plan view of part of a modified form of the apparatus of Figures 5 to 9,
Figure 11 is a diagrammatic perspective view of a cut-off apparatus in accordance with a second example of the present invention,
Figure 12 is an enlarged diagrammatic sectional view of part of the apparatus of Figure 11, and,
Figure 13 is an exploded diagrammatic perspective view of part of the corrugation support of the apparatus of Figure 11.

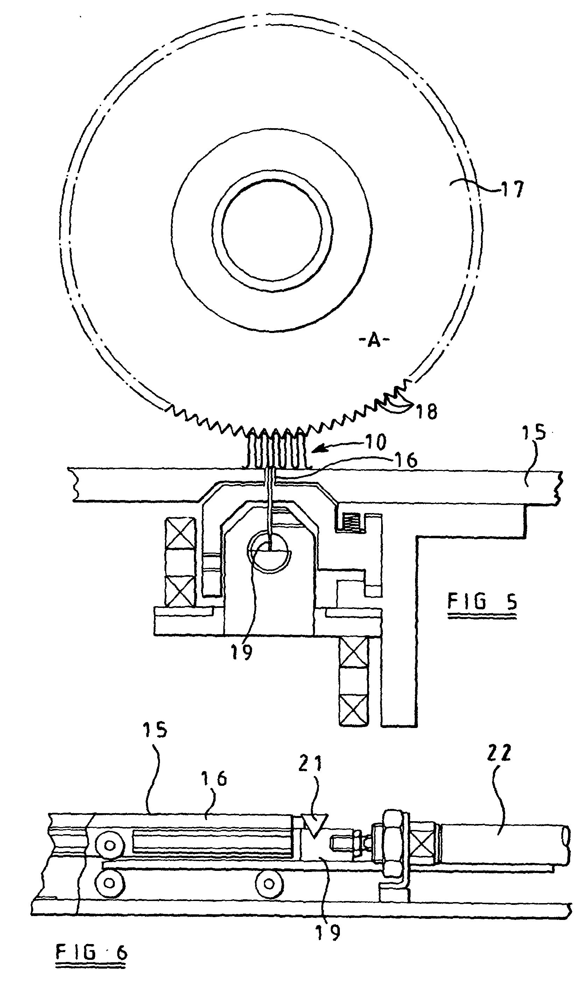

Referring firstly to Figures 5 to 8, the apparatus for cutting predetermined lengths from continuously formed corrugated strip metal includes a generally planar support table 15 along the upper surface of which transversely corrugated metal strip 10 is traversed in the direction of the length of the strip. Although forming no part of the present invention, plane metal strip from a spool is fed continuously through a corrugating machine which forms the strip with transversely extending parallel corrugations 11 at a regular pitch. The corrugated strip 10 may be of the plane form illustrated in Figure 1, or may have louvres 14 of the kind illustrated in Figures 2, 3, or 4. The presence or absence of louvres or other formations in the planar regions 12 of the corrugations 11 is irrelevant in relation to the cut-off apparatus of the present invention. Indeed, the apparatus of the present invention is not restricted to use with corrugated strip metal for use in the manufacture of heat exchangers, and can be used with corrugated strip metal for other purposes, or, with suitable modifications which will be readily apparent to the skilled man, the apparatus can be used with corrugated strip materials other than metal.

The table 15 is formed with a transversely extending slot 16 over which the corrugated strip 10 passes. The slot 16 is at right angles to the length of the table 15, and thus the bends 13 at the lower edges of the corrugations of the strip 10 align with the slot 16 in sequence as the strip 10 passes along the length of the table 15.

Disposed above the table 15 is a roller 17 having its axis of rotation parallel to and disposed vertically above the slot 16. The outer surface of the roller 17 is formed with a plurality of axially extending flutes 18, the flutes 18 being equi-angularly spaced around the outer cylindrical surface of the roller 17 at a pitch equal to the pitch of the corrugations 11 along the length of the corrugated strip 10. The roller 17 is rotated at a speed equivalent to the linear speed of movement of the strip 10 along the platform 15 and the spacing of the periphery of the roller 17 from the upper surface of the table 15 is such that the upper bends of the corrugated strip 10 engage in the flutes 18 as the material 10 passes between the table 15 and the roller 17. It will be recognised therefore that the roller 17 controls the movement of the strip 10 at least in that region of the strip 10 closely proximate the slot 16. The roller 17 controls the speed at which corrugated strip 10 passes over the slot 16 and prevents vertical movement of the strip 10 relative to the platform 15. It will be recognised that should the speed at which strip 10 is being produced by the corrugating apparatus exceed the speed at which corrugated strip 10 can pass between the roller 17 and the table 15 then bunching and compression of the corrugated material upstream of the roller 17 can take place.

Disposed beneath the table 15 is a blade carriage 19 carrying a cutting blade 21. The blade 21 is aligned with the centre of the slot 16 and the carriage 19 is guided for movement relative to the table 15 to permit the blade 21 to traverse the length of the slot 16, that is to say the width of that region of the table 15 upon which corrugated strip 10 passes. A double acting pneumatic or hydraulic ram 22 has its moving component coupled to the carriage 19 so as to drive the carriage 19 and the blade 21 from a rest position as shown in Figure 6 to an operated position in which the blade has traversed the length of the slot 16. The ram 22 can be reversed to return the blade 21 from its operated position to the rest position.

The blade 21 is in the form of an equilateral triangle and is clamped to the carriage 19 with one of its sides horizontal and uppermost in use. Thus the blade presents a forwardly facing cutting tip and a rearwardly facing cutting tip, and the vertical position of the blade 21 relative to the table 15 is such that the blade protrudes above the level of the table by an amount equal to the thickness of the strip material. Thus, when the blade 21 cuts through the bottom bend 13 of a corrugation it does so without protruding to any significant extent into the corrugation.

The basic operation of the apparatus illustrated in Figures 5 and 6 is as follows. A servo-motor and an associated control system responsive to the speed of the corrugator drives the roller 17 at a rotational speed matched to the speed at which strip 10 is produced by the corrugator and after a predetermined length of corrugated strip 10 has passed over the slot 16, rotation of the roller 17 is halted with the lower bend 13 of a corrugation disposed over the slot 16. Furthermore the roller 17 has associated therewith a rotary transducer which, by monitoring the rotational position of the roller 17 can "count" the number of corrugations passing over the slot 16. The control system of the roller servo-motor causes rotation of the roller 17 to be halted when a predetermined number of corrugations has passed the slot 16. Movement of the roller 17 is suspended for the very brief length of time necessary for the ram 22 to drive the blade 16 along the length of the slot thus cutting the bend 13 positioned over the slot 16.

At the end of the cutting stroke the ram 22 is not returned, and thus the carriage 19 and blade 21 remain in their operated position. However, immediately the blade 21 has completed its cutting stroke the roller 17 is driven again by the servo motor, and since the corrugator continued to operate while the roller 17 was stationary and thus caused a bunching of the corrugations upstream of the roller 17, then initially the control system causes the roller 17 to be driven at a speed in excess of the speed at which corrugated strip is issuing from the corrugator so as to remove the "excess" material upstream of the roller 17. Thereafter the roller 17 rotates at a speed corresponding to the speed of production of strip 10 until again the count indicates that the predetermined number of corrugations have passed the slot 16. At that time the roller 17 is halted again and the ram 22 is retracted returning the blade 21 and carriage 19 to the rest position and cutting the lower bend 13 of a corrugation during the return movement. Thereafter the cycle is repeated.

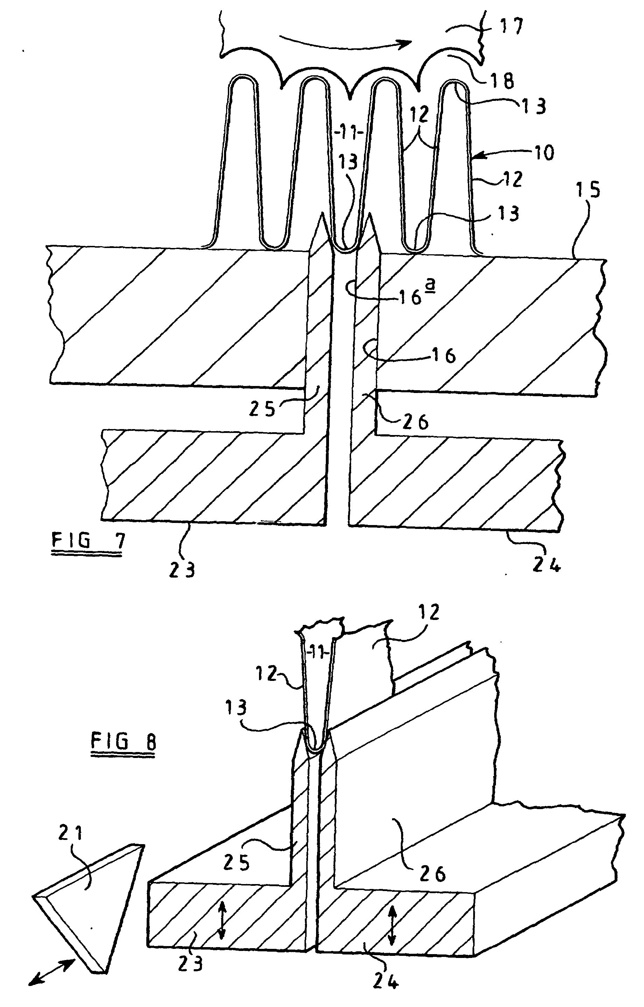

Figures 7 and 8 illustrate a greatly preferred, but not essential, feature of the apparatus. Positioned beneath the table 15 in the region of the slot 16 are first and second lift blocks 23, 24 each of which includes a respective upstanding elongate plate 25, 26. The plates 25, 26 are the same length as the slot 16 in the table 15 or at least the same length as the width of the corrugated strip 10. The plates 25, 26 extend upwardly from beneath the table through the slot 16, and in effect define opposite moveable side walls of the slot 16. Thus the plates 25, 26 are spaced apart by a slot 16a within the slot 16, the slot 16a being the slot along which the blade 21 traverses in use. The upper, free ends of the plates 25, 26 are tapered to an edge and by moving the blocks 23, 24 upwardly relative to the table 15 the upper, edge regions of the plates 25, 26 can be caused to protrude upwardly from the table 15 on either side of a corrugation 11 of the strip 10. The tapered upper edges of the plates 25, 26 facilitate the passage of the plates on either side of the corrugation across the width of the table 15, and further serve to centre the lower bend 13 of the corrugation between the plates 25, 26.

When the carriage 19 and blade 21 are in either their rest position or their operated position, the blocks 23, 24 are in a lowered, rest position relative to the table 15 in which the plates 25, 26 do not protrude upwardly from the table 15 and thus do not impede the longitudinal progress of the strip 10 along the table. However, at the commencement of a cutting stroke of the blade 21, irrespective of whether the blade 21 is moving from its rest position or from its operated position, the carriage 19 coacts with the blocks 23, 24 to lift the blocks thus causing the plates 25, 26 to protrude on either side of a corrugation 11. It will be recognised that at this point in the operating sequence of the machine the roller 17 will have halted, and thus the corrugated strip 10 in the region of the slot 16 will have been halted with a corrugation 11 having its lower bend 13 positioned over the slot 16. The blade 21 will then traverse the length of the bend 13 cutting the strip along the centre line of the bend 13 and when the blade reaches the end of its travel the blocks 23, 24 will be allowed to return to their rest positions either under gravity, or aided by springs or other restoring mechanisms, so that the plates 25, 26 no longer protrude from the upper surface of the table 15, and longitudinal progression of the corrugated strip 10 can resume.

In a modification (not shown) the plates 25, 26 are replaced by arrays of parallel fingers upstanding from the blocks 23, 24 respectively.

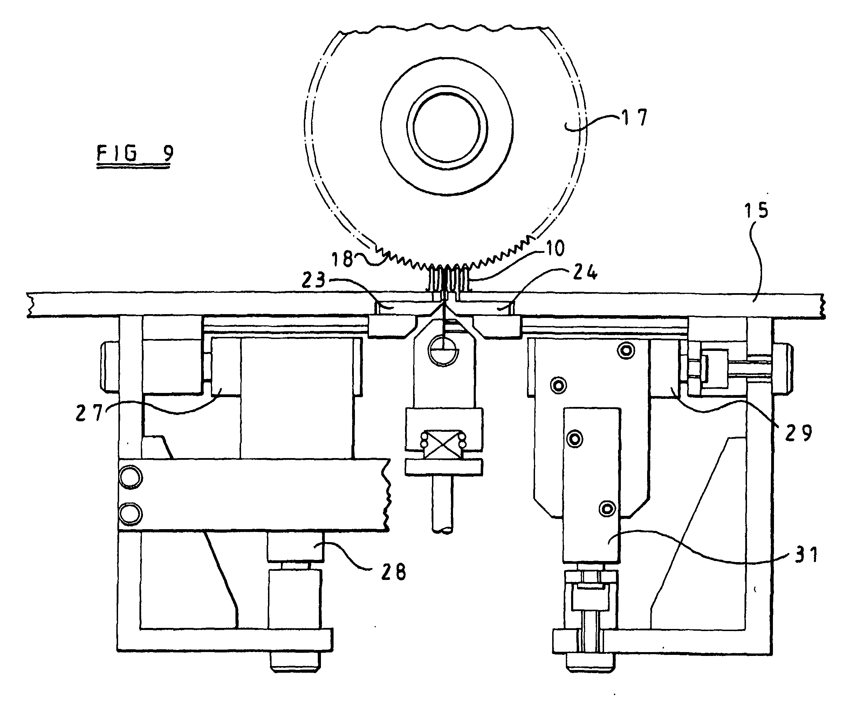

Figure 9 illustrates a modification of the apparatus described with reference to Figures 7 and 8, in which in addition to being moveable vertically the blocks 23, 24 together with their respective plates 25, 26 have limited freedom of movement towards and away from one another. Associated with the block 23 are first and second electrical solenoids 27, 28. The solenoid 27 has its longitudinal axis parallel to the length of the table 15 while the solenoid 28 has its longitudinal axis at right angles to the table 15. Both solenoids 27, 28 react at one end against the block 23 and at the other end against the fixed frame of the apparatus. Similar solenoids 29, 31 are associated with the block 24. In use, after the roller 17 has been halted, and fractionally before the carriage 19 and blade 21 start a cutting stroke, the solenoids 27-31 are energised with alternating current such that each solenoid generates a reciprocatory movement in the direction of its longitudinal axis. Thus both blocks 23, 24 together with their respective plates 25, 26 are vibrated in a direction towards and away from one another, that is to say in a plane parallel to the plane of the table 15, and simultaneously are vibrated vertically, that it is to say in a plane at right angles to the table 15. The vibratory movement of the plates 25, 26 relative to the corrugation 11 facilitates the engagement of the plates 25, 26 on opposite sides of the corrugation 11, and further facilitates the centring of the corrugation between the plates 25, 26. Provided that the amplitude of vibration of the solenoids 27, 29 is sufficiently small, then the vibration of the solenoids can be continued during the cutting stroke of the blade 21. It is to be recognised however that the stroke of the solenoids 27, 29 must be sufficiently small that the plates 25, 26 do not obstruct the movement of the blade 21 during its cutting stroke. In a modification therefore the control system of the apparatus ceases the vibratory energisation of the solenoids 27-29 as the blade 21 enters between the plates 25, 26 to perform its cutting stroke.

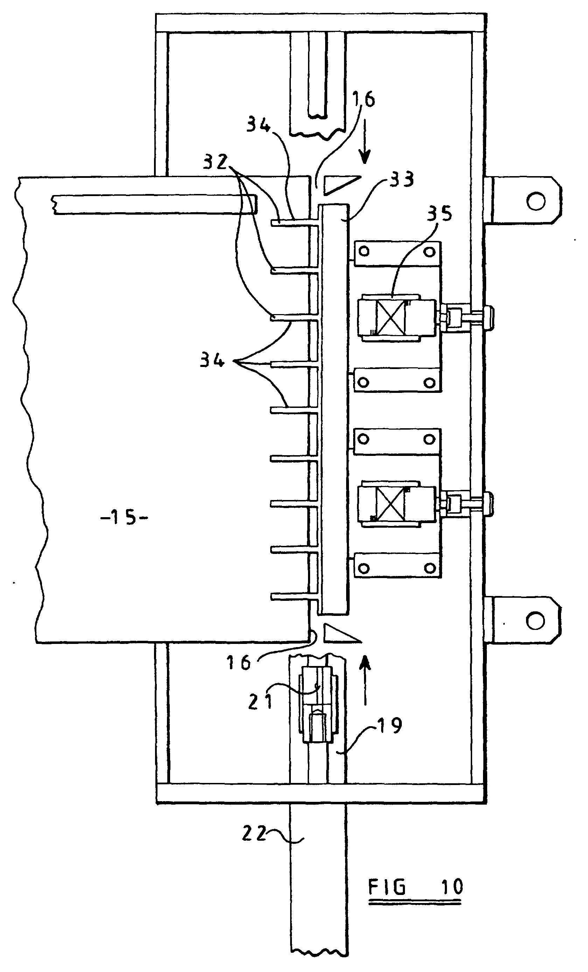

Figure 10 illustrates a further modification which may be applied to any of the embodiments of the apparatus described above. It will be recognised that the slot 16 extending across the width of the table 15 may present an impediment to smooth movement of the corrugated strip 10 longitudinally on the surface of the table 15 in the sense that the lower bends 13 of corrugations may catch or snag in the slot 16 as the strip 10 is moved along the table 15. Figure 10 illustrates an arrangement in which a plurality of bridging fingers 32, extending longitudinally of the table 15, bridge the slot 16 during longitudinal movement of the corrugated strip 10. In Figure 10 the table to the left hand side of the slot 16 can be seen, but the table to the right hand side of the slot 16 has been omitted to show components positioned beneath the table. The fingers 32 are carried by a carrier bar 33 disposed beneath the right hand side of the table 15. The left hand side of the table 15 has a plurality of slots 34 receiving the fingers 32. The fingers 32 having their upper surfaces flush with the surface of the table 15. Corresponding, aligned, slots are provided in the right hand side of the table 15 and by means of a mechanism 35 supporting the bar 33 beneath the table 15, the bar 33 and fingers 32 can be moved to the right in Figure 10 so that the fingers 32 are withdrawn horizontally from the slots 34, exposing the slot 16 (and the slot 16a between the plates 25, 26) the fingers 32 being received in the corresponding longitudinally extending slots in the table 15 to the right hand side of the slot 16. Thus in the retracted position of the bar 33 and fingers 32 the slot 16 is open along the whole of its length so that the fingers 32 do not impede the upward movement of the plates 25, 26 and do not obstruct the transverse movement of the carriage 19 and blade 21 during a cutting stroke.

It will be recognised that normally, during longitudinal progression of the strip 10 along the table 15, the fingers 32 will be in their forward position bridging the slot 16 and preventing any snagging of the strip 10. However, as the roller 17 is halted and the carriage 19 commences movement, then immediately before the carriage 19 causes the blocks 23, 24 to lift, it operates the mechanism 35 to withdraw the bar 33 and fingers 32 thus exposing the slot 16 so that the plates 25, 26 can be moved upwardly through the slot 16 and the blade 21 can traverse the length of the slot 16a between the plates 25, 26. Similarly, at the end of the cutting stroke, irrespective of the direction in which cutting is taking place, after the blocks 23, 24 have been permitted to return to their rest position the mechanism 35 is permitted to return the bar 33 and fingers 32 to their forward position so that the fingers bridge the slot 16.

In a modification of the apparatus described above, the cutting mechanism 19, 21, 22 is carried by a longitudinally moveable portion of the table 15. The longitudinally moveable portion of the table can be moved at the same speed as the speed of the strip 10 along the table and thus the cutting mechanism 19-22 can be actuated "on the fly" and it becomes unnecessary to halt the progression of the corrugated strip 10 to effect cutting. The roller 17, or its equivalent will be moveable longitudinally with the longitudinally moveable part of the table and in addition to counting the number of corrugations between consecutive cuts, the wheel will serve to position a corrugation lower bend 13 above the path of the blade 21 for the fraction of a second that it takes for the blade to traverse the width of the strip 10.

After completion of a cutting stroke the movable part of the table is returned in the opposite direction to the travel of the strip 10 in readiness for a subsequent "on the fly" cutting stroke.

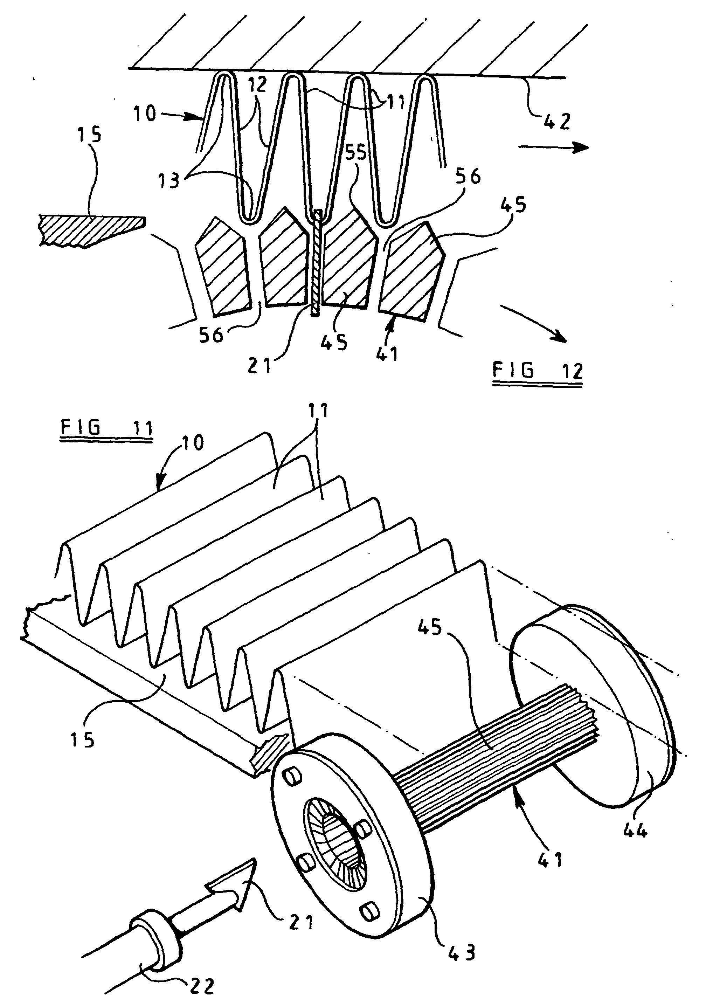

An alternative form of cut-off apparatus is illustrated in Figures 11, 12 and 13. As with the apparatus described above transversely corrugated metal strip 10 is fed from a corrugator (not shown) along the surface of an elongate, generally planar, support table 15. Disposed within a transversely extending gap of the table 15 is a rotatable support drum 41 having its axis of rotation at right angles to the length of the strip 10 and parallel to the plane of the table 15. A guide plate 42 is positioned above the drum 41 parallel to the table 15 and spaced from the drum 41 by an amount such that strip 10 is guided by the plate 42 and the drum 41 as it passes through the apparatus. In this regard it should be noted that Figure 12 illustrates a clearance between corrugations 11 and the drum 12 which does not exist in practice. This clearance is shown in Figure 12 to aid the clarity of Figure 12.

The drum 41 is formed from steel, and comprises first and second annular support discs 43, 44 supporting, and spaced apart by, a plurality of elongate support bars 45. The discs 43, 44 are each formed, in their outer face, with a plurality of equi-angularly spaced radially extending grooves 46 which break both the inner and outer cylindrical surfaces of the disc. Intermediate their ends the grooves 46 are intersected by a circular groove 47 in the outer face of the disc the groove 47 being coaxial with the inner and outer cylindrical surfaces of the disc.

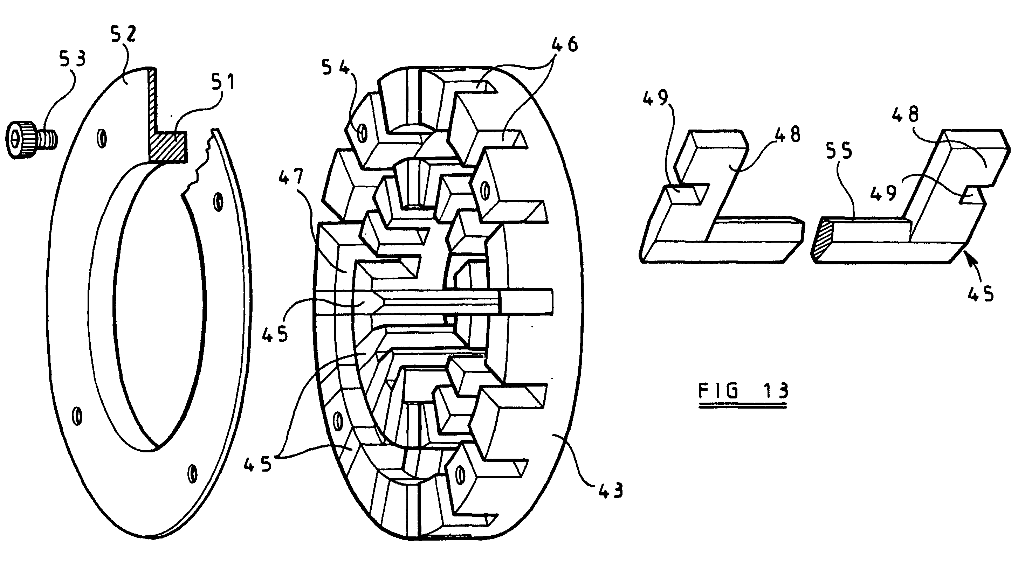

The bars 45 are elongate and have a cross-sectional shape generally of the form seen in Figures 12 and 13. Each bar has an integral, upstanding lug 48 at each end, each lug having a rectangular notch 49 in its outer face. The bars 45 are inserted through the central apertures of the discs 43, 44 with the longitudinal extent of the bar 45 at right angles to the plane of the disc and each bar is then engaged with each disc 43, 44 by seating the respective lug 48 in a respective groove 46 of the disc. When a bar is positioned with its edge in engagement with the inner cylindrical surface of a disc and its lug 48 received within a corresponding groove 46 then the notch 49 of the lug 48 is aligned with the groove 47 so that a clamping ring 51 having the same cross-sectional shape as the groove 47 and notches 49 can be seated in the groove 47 and notches 49 to clamp the bars 45 to the respective disc 43, 44. Each ring 51 includes an integral radially outwardly extending flange 52 apertured to receive fixing screws 53 which extend through the flange 52 and into screw threaded engagement with bores 54 in the respective disc 43, 44.

It will be recognised therefore that the assembled support drum consists of a pair of discs 43, 44 spaced apart by a plurality of bars 45, the bars being secured to the discs by respective clamping rings 51.

The face of each bar 45 lying between its respective lugs 48 is of V-shaped cross-section presenting a raised apex 55 outwardly, between the discs 43, 44 in use. The bars 45 extend parallel to one another between the discs 43, 44 and are equi-angularly spaced around the common axis of the discs. The side faces of each of the bars lie in planes generally radial with regard to the common axis of the discs 43, 44 and are spaced apart so that elongate slots 56 are defined between the mutually presented side walls of adjacent bars 45. The slots 56 extend through the full length of the drum and are accessible at the outer faces of the discs 43, 44 where the bars 45 protrude through the central apertures of the discs.

In effect the outer surface of the drum, between the discs 43, 44, is a series of axially extending, circumferentially spaced V-shaped grooves defined between the apical edges 55 of the bars 45. The base of each V-shaped groove opens into a slot 56 and the pitch of the V-shaped grooves is chosen to be equal to the pitch of corrugations along the length of the corrugated strip 10.

As is apparent from Figure 12 corrugated strip extends along the support table 15 and, when it extends across the gap in the table 15 within which the drum 41 is positioned, the lower bends 13 of the strip 10 seat within the V-shaped grooves with the apex of the bend 13 seated against the top opening of the respective slot 56.

It should be noted that in Figure 12 a clearance is illustrated between a bend 13 and the faces of its respective V-shaped groove and it is to be understood that in practice this clearance will not be present and the bend of the corrugated strip will seat against the opposite faces of the V-shaped groove, (closing the top of the respective slot 56 along the whole length of the bend 13 of the corrugated strip). The upper bends 13 of the corrugated strip slide against the under surface of the guide plate 42, and it will be appreciated that rotating the drum 41 about its longitudinal axis serves to draw corrugated strip 10 through the gap between the drum 41 and the guide plate 42. Downstream of the drum 41 the table 15, or an equivalent support surface, can be continued.

A cutting blade 21 equivalent to the blade 21 of the apparatus described above, is associated with the drum 41 and is carried by a convenient design of linear actuator 22. The blade 21 is guided by means (not shown) for movement parallel to the axis of the drum 41, the thickness of the blade 21 being such that it can pass with a slight clearance along the length of a slot 56 between adjacent bars 45.

The drum 41 is mounted for rotation by supporting bearings which engage the outer cylindrical surface of the discs 43, 44, and a drive arrangement is provided for rotating the drum in its bearings. The drive arrangement may take any one of a number of convenient forms, and for example one or both discs 43, 44 can be formed with gear teeth engaged by a gear wheel, or drive belt of the drive mechanism. The drive mechanism includes an accurate servomotor the control system of which can bring the rotor of the motor to a halt at a very accurately predetermined point in its rotation. Thus the drum 41 can be driven, and can be stopped at accurately predetermined rotational positions, having rotated through a predetermined angle, or number of revolutions.

In use, the drum 41 is rotated to carry corrugated strip 10 through the gap between the drum 41 and the guide plate 42 until a predetermined length of strip has passed through the gap. Thereafter, the drive mechanism of the drum is stopped so that the drum is brought to a halt at an accurately defined position in which a slot 56 is vertically orientated, and is aligned with the blade 21. The mechanism 22 is then actuated to drive the blade along the length of the slot 56, the upper edge of the blade protruding through the slot 56 into the V-shaped groove, and thus severing the strip 10 along the centre of the bend 13 seated across the top of the slot 56. The only part of the cutting arrangement which coacts with the drum 41 is the blade 21, and thus provided that the blade 21 has passed through the full length of the slot 56 there is no need to return the blade to its rest position before rotation of the drum recommences. It is to be understood however that if desired the blade can be caused to perform a forward cutting stroke, and then a return stroke before the drum is rotated again.

After the corrugation has been cut the drum 41 is again rotated through a predetermined angular distance to carry a further predetermined length of corrugated strip 10 through the gap between the drum 41 and the guide plate 42 before the drum again is arrested to permit the next cutting stroke to take place. It will be recognised that after cutting, the subsequent rotation of the drum displaces the cut length of corrugated strip onto the support surface downstream of the drum for further processing.

It will be noted that the cutting action of the apparatus illustrated in Figures 11 to 13 is the same as that described in relation to Figures 5 to 10 in that the corrugated material is cut from the outside of a bend, along the centre line of the bend, and thus there is no need for the blade to enter between corrugations.

## Claims

1. Apparatus for cutting transversely corrugated strip material (10) comprising a support surface (15) over which the corrugated material (10) passes, and a cutting blade (21) capable of severing the corrugated strip material (10), the apparatus being **characterised by** means (19) for traversing the blade (21) along the outer surface of the length of a bend (13) interconnecting the planar regions (12) of a corrugation (11) to severe the strip material (10) along the length of said bend (13).

2. Cutting apparatus as claimed in Claim 1 **characterised by** means (17) resisting lifting movement of the corrugated material (10) in the region of said blade (21) during traverse of the blade along the length of the exterior of the bend (13) of the corrugation (11).

3. Cutting apparatus as claimed in Claim 1 or Claim 2 **characterised in that** the corrugated material (10) is fed lengthwise over said support surface (15) and its movement, at least in the region of the corrugation (11) to be cut, is halted for the period time during which the blade (21) traverses the length of the corrugation.

4. Cutting apparatus as claimed in Claim 1 or Claim 2 **characterised in that** said blade (21) is movably mounted on a carrier moveable longitudinally with the corrugated strip material (10) and synchronised therewith so that during the cutting stroke the cutting blade (21) is moving longitudinally with the corrugated material at the same time as it is traversing the length of the corrugation (11) being cut.

5. Cutting apparatus as claimed in any one of Claims 1 to 4 **characterised in that** said blade (21) is able to cut in both forward and reverse directions, and after a cutting stroke in one direction the blade (21) is retained in position while a predetermined length of corrugated material (10) passes through the apparatus, before being returned to its original starting position performing a second cut during its return movement.

6. Cutting apparatus as claimed in any one of Claims 1 to 5 **characterised in that** a fluted wheel or roller (17) having axially extending peripheral flutes (18) in a pitch corresponding to the pitch of the corrugations (11) on the strip (10) to be cut, is positioned above the path of movement of said blade (21) and cooperates with the corrugated strip (10) both to prevent the strip (10) lifting during traverse of the cutting blade (21), and also to halt longitudinal movement of the strip (10) relative to the blade (21), at least in the region of the strip (10) being cut, during the cutting operation.

7. Cutting apparatus as claimed in any one of the preceding Claims **characterised in that** said support surface (15) has a transversely extending slot (16) along which the cutting blade (21) travels during a cutting operation.

8. Cutting apparatus as claimed in Claim 7 **characterised in that** opposite walls of said slot (16) are defined by vertically moveable walls (25, 26) which, at the commencement of a cutting stroke of said blade (21), are lifted relative to the support surface (15) and the corrugated material (10) to engage the planar regions (12) of the corrugation (11) on opposite sides of the bend (13) so as to stabilise the corrugated material (10) during cutting.

9. Cutting apparatus as claimed in Claim 7 or Claim 8 **characterised in that** said support surface (15) includes bridging fingers (32) which span the slot (16) to support the corrugated material (10) as it passes over the slot (16), and which are displaced to fully expose the slot (16) during a cutting stroke of said blade (21).

10. Cutting apparatus as claimed in Claim 1 **characterised by** an externally, axially grooved drum (41) mounted for rotation relative to said support surface (15) and engageable with said corrugated strip material (10) passing along said support surface (15) such that a bend (13) of a corrugation (11) seats within one of said grooves, the base of each of said grooves being longitudinally slotted (56) to provide access to the exterior of a corrugation bend (13) seated in the groove, to a cutting blade (21) movable axially within the drum (41) to cut said bend (13).

11. Cutting apparatus as claimed in Claim 10 **characterised in that** the corrugated material (10) engaging the drum (41) passes between said drum (41) and an abutment surface (42) as the drum rotates, said abutment surface (42) resisting lifting of the corrugation (11) relative to the drum during cutting of its bend (13).

12. Cutting apparatus as claimed in Claim 10 or Claim 11 **characterised in that** said blade (21) lies clear of the drum slots (56) at the end of its stroke to permit the drum (41) to rotate, there being means halting drum rotation as the blade (21) traverses a drum slot (56) to cut the corrugated material.

13. Cutting apparatus as claimed in any one of Claims 10 to 12 **characterised in that** the blade (21) is carried by a mechanism (22) extensible axially through the drum (41).

14. Cutting apparatus as claimed in any one of Claims 10 to 13 **characterised in that** said drum (41) is housed in an aperture in said support surface (15) such that the plane of said support surface (15) is tangential to the pitch circle of the bases of said grooves of the drum.

## Patentansprüche

1. Vorrichtung zum Schneiden von quer gewelltem Streiferunaterial (10), die eine Stützfläche (15), über die das gewellte Material (10) hinweggeht, und eine Schneidklinge (21) umfaßt, die dazu in der Lage ist, das gewellte Streifenmaterial (10) zu durchtrennen, wobei die Vorrichtung **gekennzeichnet ist durch** Mittel (19) zum Überqueren der Klinge (21) entlang der Außenfläche der Länge einer Biegung (13), welche die ebenen Bereiche (12) einer Wellung (11) miteinander verbindet, um das Streifenmaterial (10) entlang der Länge der Biegung (13) zu durchtrennen.

2. Schneidvorrichtung nach Anspruch 1, **gekennzeichnet durch** Mittel (17), die während der Verschiebung der Klinge entlang der Länge des Äußeren der Biegung (13) der Wellung (11) einer Hebebewegung des gewellten Materials (10) im Bereich der Klinge (21) widerstehen.

3. Schneidvorrichtung nach Anspruch 1 oder Anspruch 2, **dadurch gekennzeichnet, daß** das gewellte Material (10) der Länge nach über die Stützfläche (15) zugeführt wird und seine Bewegung, wenigstens in dem zu schneidenden Bereich der Wellung (11), für den Zeitraum angehalten wird, während dessen die Klinge (21) die Länge der Wellung überquert.

4. Schneidvorrichtung nach Anspruch 1 oder Anspruch 2, **dadurch gekennzeichnet, daß** die Klinge (21) beweglich an einem Träger angebracht wird, der in Längsrichtung mit dem gewellten Streifenmaterial (10) bewegt werden kann, und mit demselben synchronisiert wird, so daß sich die Schneidklinge (21) während des Arbeitshubs zur gleichen Zeit in Längsrichtung mit dem gewellten Material bewegt, wenn sie die Länge der gerade geschnittenen Wellung (11) überquert.

5. Schneidvorrichtung nach einem der Ansprüche 1 bis 4, **dadurch gekennzeichnet, daß** die Klinge (21) dazu in der Lage ist, sowohl in der Vorwärts- als auch in der Rückwärtsrichtung zu schneiden, und die Klinge (21) nach einem Arbeitshub in der einen Richtung, während eine vorher festgelegte Länge des gewellten Materials (10) durch die Vorrichtung hindurchgeht, in Position gehalten wird, bevor sie zu ihrer ursprünglichen Startposition zurückgeführt wird, wobei sie während ihrer Rückführbewegung einen zweiten Schnitt ausführt.

6. Schneidvorrichtung nach einem der Ansprüche 1 bis 5, **dadurch gekennzeichnet, daß** ein Riffelrad oder -zylinder (17) mit in Axialrichtung verlaufenden Umfangsrillen (18) in einer Teilung, die der Teilung der Wellungen (11) an dem zu schneidenden Streifen (10) entspricht, oberhalb der Bewegungsbahn der Klinge (21) angeordnet wird und mit dem gewellten Streifen (10) zusammenwirkt, um während des Schneidvorgangs sowohl zu verhindern, daß sich der Streifen (10) während der Verschiebung der Schneidklinge (21) hebt, als auch eine Längsbewegung des Streifens (10) im Verhältnis zur Klinge (21), wenigstens in dem gerade geschnittenen Bereich des Streifens (10), anzuhalten.

7. Schneidvorrichtung nach einem der vorhergehenden Ansprüche, **dadurch gekennzeichnet, daß** die Stützfläche (15) einen quer verlaufenden Schlitz (16) hat, wobei sich die Schneidklinge (21) während eines Schneidvorgangs entlang desselben bewegt.

8. Schneidvorrichtung nach Anspruch 7, **dadurch gekennzeichnet, daß** gegenüberliegende Wände des Schlitzes (16) durch in Vertikalrichtung bewegliche Wände (25, 26) definiert werden, die am Beginn eines Arbeitshubs der Schneidklinge (21) im Verhältnis zu der Stützfläche (15) und dem gewellten Material (10) angehoben werden, um die ebenen Bereiche (12) der Wellung (11) auf gegenüberliegenden Seiten der Biegung (13) in Eingriff zu nehmen, um so das gewellte Material (10) während des Schneidens zu stabilisieren.

9. Schneidvorrichtung nach Anspruch 7 oder Anspruch 8, **dadurch gekennzeichnet, daß** die Stützfläche (15) Überbrückungsfinger (32) einschließt, die den Schlitz (16) überspannen, um das gewellte Material (10) zu stützen, wenn es über den Schlitz (16) hinweggeht, und die verschoben werden, um den Schlitz (16) während eines Arbeitshubs der Klinge (21) vollständig freizulegen.

10. Schneidvorrichtung nach Anspruch 1, **gekennzeichnet durch** eine außen in Axialrichtung gerillte Trommel (41), zum Drehen im Verhältnis zur Stützfläche (15) angebracht und in Eingriff zu bringen mit dem gewellten Streifenmaterial (10), das entlang der Stützfläche (15) passiert, so daß eine Biegung (13) einer Wellung (11) innerhalb einer der Rillen sitzt, wobei die Basis der Rillen in Längsrichtung mit Schlitzen (56) versehen wird, um einer in Axialrichtung innerhalb der Trommel (41) beweglichen Schneidklinge (21) Zugang zum Äußeren einer in der Rille sitzenden Wellungsbiegung (13) zu gewähren, um die Biegung (13) zu schneiden.

11. Schneidvorrichtung nach Anspruch 10, **dadurch gekennzeichnet, daß** das gewellte Material (10), das die Trommel (41) in Eingriff nimmt, zwischen der Trommel (41) und einer Widerlagerfläche (42) hindurchgeht, wenn sich die Trommel dreht, wobei die Widerlagerfläche (42) einem Heben der Wellung (11) im Verhältnis zur Trommel während des Schneidens ihrer Biegung (13) widersteht.

12. Schneidvorrichtung nach Anspruch 10 oder Anspruch 11, **dadurch gekennzeichnet, daß** die Klinge (21) am Ende ihres Hubs entfernt von den Trommelschlitzen (56) liegt, um zu ermöglichen, daß sich die Trommel (41) dreht, wobei es Mittel gibt, welche die Trommeldrehung anhalten, wenn die Klinge (21) einen Trommelschlitz (56) durchquert, um das gewellte Material zu schneiden.

13. Schneidvorrichtung nach einem der Ansprüche 10 bis 12, **dadurch gekennzeichnet, daß** die Klinge (21) durch einen in Axialrichtung durch die Trommel (41) ausfahrbaren Mechanismus (22) getragen wird.

14. Schneidvorrichtung nach einem der Ansprüche 10 bis 13, **dadurch gekennzeichnet, daß** die Trommel (41) in einer Öffnung in der Stützfläche (15) untergebracht wird derart, daß die Ebene der Stützfläche (15) tangential zum Teilkreis der Basen der Rillen der Trommel liegt.

## Revendications

1. Dispositif destiné à couper un matériau de bande à ondulations transversales (10), comprenant une surface de support (15), au-dessus de laquelle passe le matériau ondulé (10), et une lame de coupe (21) capable de couper le matériau de bande ondulé (10), le dispositif étant **caractérisé par** un moyen (19) destiné à traverser la lame (21) le long de la surface externe de la longueur d'une courbure (13), interconnectant les régions planes (12) d'une ondulation (11) pour découper le matériau de bande (10) le long de la longueur de ladite courbure (13).

2. Dispositif de coupe selon la revendication 1, **caractérisé par** un moyen (17) résistant au déplacement vers le haut du matériau ondulé (10) dans la région de ladite lame (21) au cours du déplacement de la lame le long de la longueur de l'extérieur de la courbe (13) de l'ondulation (11).

3. Dispositif de coupe selon les revendications 1 ou 2, **caractérisé en ce que** le matériau ondulé (10) est amené longitudinalement au-dessus de ladite surface de support (15), son déplacement, au moins dans la région de l'ondulation (11) devant être coupée, étant arrêté pendant la période de temps au cours de laquelle la lame (21) traverse la longueur de l'ondulation.

4. Dispositif de coupe selon les revendications 1 ou 2, **caractérisé en ce que** ladite lame (21) est montée de manière mobile sur un support pouvant être déplacé longitudinalement avec le matériau de bande ondulé (10), en synchronisation avec celui-ci, de sorte qu'au cours de la course de coupe, la lame de coupe (21) se déplace longitudinalement avec le matériau ondulé, de manière simultanée à son déplacement le long de la longueur de l'ondulation (11) découpée.

5. Dispositif de coupe selon l'une quelconque des revendications 1 à 4, **caractérisé en ce que** ladite lame (21) est capable d'assurer la coupe dans les directions allant vers l'avant et vers l'arrière, la lame (21) étant retenue dans la position après l'exécution d'une course dans une direction, une longueur prédéterminée de matériau ondulé (10) passant à travers le dispositif, avant le retour vers sa position de départ d'origine, effectuent une deuxième coupe au cours du déplacement de retour.

6. Dispositif de coupe selon l'une quelconque des revendications 1 à 5, **caractérisé en ce qu'**une roue ou un rouleau cannelée (17) comportant des cannelures à extension périphérique (18), avec un espacement correspondant à l'espacement des ondulations (11) sur la bande (10) devant être coupée, est positionnée au-dessus de la trajectoire de déplacement de ladite lame (21) et coopère avec la bande ondulée (10) pour empêcher un soulèvement de la bande (10) au cours de la traversée de la lame de coupe (21) et pour arrêter le déplacement longitudinal de la bande (10) par rapport à la lame (21), au moins dans la région de la bande (10) coupée, au cours de l'opération de coupe.

7. Dispositif de coupe selon l'une quelconque des revendications précédentes, **caractérisé en ce que** ladite surface de support (15) comporte une fente à extension transversale (16) le long de laquelle se déplace la lame de coupe (21) au cours d'une opération de coupe.

8. Dispositif de coupe selon la revendication 7, **caractérisé en ce que** les parois opposées de ladite fente (16) sont définies par des parois à déplacement vertical (25, 26), soulevées par rapport à la surface de support (15) et au matériau ondulé (10) au début d'une couse de coupe de ladite lame (21) en vue d'un engagement dans les régions planes (21) de l'ondulation (11) sur les côtés opposés de la courbure (13), de sorte à stabiliser le matériau ondulé (10) au cours de la coupe.

9. Dispositif de coupe selon les revendications 7 ou 8, **caractérisé en ce que** ladite surface de support (15) englobe des doigts de pontage (32) s'étendant au-delà de la fente (16) pour supporter le matériau ondulé (10) lors de son passage au-dessus de la fente (16) et déplacés en vue d'exposer complètement la fente (16) au cours d'une course de coupe de ladite lame (21).

10. Dispositif de coupe selon la revendication 1, **caractérisé par** un tambour comportant des rainures axiales externes (41), monté en vue d'une rotation par rapport à ladite surface de support (15) et pouvant s'engager dans ledit matériau de bande ondulé (10) passant le long de ladite surface de support (15), de sorte qu'une courbure (13) d'une ondulation (11) est positionnée dans une desdites rainures, la base de chacune desdites rainures étant fendue longitudilnalement (56) pour établir l'accès à l'extérieur d'une courbure de l'ondulation (13) positionnée dans la rainure par une lame de coupe (21) pouvant se déplacer axialement dans le tambour (41) pour couper ladite courbure (13).

11. Dispositif de coupe selon la revendication 10, **caractérisé en ce que** le matériau ondulé (10) s'engageant dans le tambour (41) passe entre ledit tambour (41) et une surface de butée (42) lors de la rotation du tambour, ladite surface de butée (42) résistant à un soulèvement de l'ondulation (1) par rapport au tambour au cours de la coupe de sa courbure (13).

12. Dispositif de coupe selon les revendications 10 ou 11, **caractérisé en ce que** ladite lame (21) est dégagée des fentes du tambour (56) à la fin de sa course, pour permettre la rotation du tambour (41), un moyen servant à arrêter la rotation du tambour lorsque la lame (21) traverse une fente du tambour (56) pour couper le matériau ondulé.

13. Dispositif de coupe selon l'une quelconque des revendications 10 à 12, **caractérisé en ce que** la lame (21) est supportée par un mécanisme (22) pouvant s'étendre axialement à travers le tambour (41).

14. Dispositif de coupe selon l'une quelconque des revendications 10 à 13, **caractérisé en ce que** ledit tambour (41) est logé dans une ouverture dans ladite surface de support (15), de sorte que le plan de ladite surface de support (15) est tangentiel au cercle d'espacement des bases desdites rainures du tambour.
